# EUROPEAN PATENT SPECIFICATION

(11) **EP 3 397 816 B1**
(45) Date of publication and mention of the grant of the patent: **01.12.2021**
(21) Application number: 16816356.6
(22) Date of filing: 16.12.2016
(51) Int. Cl.: E02F 5/10, H02G 1/10

(54) **SUBSEA PLOUGH AND PLOUGHING**
UNTERWASSERPFLUG UND PFLÜGEN
CHARRUE SOUS-MARINE ET LABOURAGE

(30) Priority: 31.12.2015 GB 201523154
(43) Date of publication of application: 07.11.2018
(73) Proprietor: Osbit Ltd, Riding Mill Northumberland NE44 6AW (GB)
(72) Inventor: BEDFORD, Stephen William, Hexham Northumberland NE46 1RQ (GB)
(74) Representative: Secerna LLP
(86) International application number: PCT/GB2016/053955
(87) International publication number: WO 2017/115070

(56) References cited:
- EP-A1- 3 121 917
- WO-A1-00/52268
- WO-A1-91/05196
- GB-A- 2 329 201
- GB-A- 2 353 306
- GB-A- 2 364 358
- US-A- 4 759 138

## Description

The present invention relates to a subsea plough and a method of using a subsea plough. In particular but not exclusively, the present invention relates to a subsea plough usable to bury a flexible power cable at a subsea location. The plough has a bending guide that can be raised and lowered through a large range of motion to enable the cable to be conveniently loaded and/or dropped from the plough and for the plough to be submerged ready for use without exceeding a minimum bend radius stipulated for the cable.

US4,759,138 (Grinsted) described an example of a prior art subsea plough, comprising a bellmouth through which a cable extends, wherein the bellmouth can be inclined upwardly from a horizontal orientation.

It is well known that various types of flexible elongate structures must, from time to time, be supplied across a subsea seabed surface. An example of such a flexible elongate member is a power cable. Conventionally to help protect a power cable from trawling nets and anchors such cables have been buried at a predetermined depth below the seabed surface. Best protection for such cabling is achieved if the disturbance to the structure of the soil above the cable is minimised. Reducing soil disturbance reduces pulling force which is also attractive. Latterly environmental concerns about heating the seabed have driven power cables to be buried to a depth that relates to the thermal conductivity of the soil and not just for protection. It is very difficult to measure protection, so the acceptance criteria is often burial depth. Subsea ploughs have conventionally been utilised to help provide a channel in a seabed in which the flexible elongate member such as a power cable can be buried. Such subsea ploughs commonly utilise a plough share as a cutting element which is secured to some form of chassis which can be towed through a body of water by a surface vessel thus dragging the plough share through the seabed forming the channel.

The first cable ploughs buried telecom cables to a depth of 1.1 m. Early research showed that a plough share having an asymmetric cross section, with a straight land-slide on one side and a wedged profile on the other, coupled with an inclined disc cutter, would cause a triangular wedge of soil to be separated along two straight shear planes, which would lift up to allow the insertion of the cable and would fall back over the cable, largely in-tact.

As the requirement to bury cables deeper increased, the use of a disc to create a failure plane became impractical, but the asymmetric share design continued in use.

The acutely angled wedge on the front of a vertically inclined share has the effect of squeezing the soil to one side of the share, compacting it and if necessary shearing it upwards in an undefined failure plane. This creates minimal soil disturbance but generates largely horizontal soil forces: lateral forces balanced between two sides of the share and longitudinal forces resisting pull, largely from friction on the sides of the share.

Because the soil force is largely horizontal, there is no soil component pulling the plough into engagement and therefore plough stability is limited by plough weight. This problem is particularly acute with a large share operating in strong soils where full pull is required at shallow depth. The stability of the plough at shallow depth can be increased by lowering the tow point. This has the added advantage for power cables of reducing the severity of the bend required in the cable. The vertical share then, has the following limitations:
- Lateral soil compaction generates significant friction in a horizontal plane opposing forward motion - increasing tow forces
- The long failure path required generates very high pore pressures in dilating soils, necessitating jetting to achieve reasonable progress rates without extreme tow forces
- Horizontal reaction forces creates a tendency to 'ride-out' when the ground gets too hard, in excess of the plough mass

Plough stability can be improved in strong soils by raking the share to create a downward component to the soil force. Instead of having a vertical forward edge to the share a flat forward raked surface just behind the share tip extends in front of the share creating an upward wedging action, the forward edge of the main share is raked back to ensure that the soil is failed upwards before being parted by the main share.

Failing the soil upwards is the easiest failure path, minimising friction on the share and therefore pull force and the corresponding reaction down on the share tip, increases plough stability and reduces the tendency for the share to ride out in hard soils.

For operating at greater depths, particularly in dilating sands, a secondary tip, or forecutter, forward and ahead of the main share tip has been utilised. This fails the soil and reduces the flow path for water to the main tip. This can have a dramatic effect on the tow force at speed in sandy soils at full depth.

The limitations on aggressively raked share design are:
- Difficult depth control - aggressive raking generates such high engagement forces that the plough fails the soil under the heel pulling itself into work; and
- High vertical loads, in excess of those required to hold the plough in work, manifest as increased heel and skid friction, increasing tow forces.

Jetting at the share has been adopted on some conventional ploughs, with mixed results. A fundamental reason for some of the mixed results is down to a characteristic of subsea trenching which is not seen on land: the requirement to flow water into the soil to fill pores, minimising the negative pore pressures which are otherwise generated increasing cutting forces. The water may be flowed by creating a flow path from the free surface, or by pumping water into the immediate area-jetting.

Jetting is known to have found particular favour with a vertical share, where it reduces some of the inherent compromises. Jetting also helps to lubricate the share (mitigating another vertical share deficiency) and as such it has merit for any share design, however there is some associated complexity which should be considered. The vertical share design in particular suffers from nozzle blockage as the nozzles face the direction of travel and therefore are forcibly 'filled' if the jetting pressure is insufficient.

In terms specifically relating to the burying power cables rather than any other type of flexible elongate element it is to be noted that power cable plough design has evolved from concepts proven in telecoms cable lay. The characteristics of the power cable are however significantly different from telecoms cables and this makes the use of conventional ploughs prone to error or difficult.

For example telecom cable is usually ploughed using simultaneous-lay-and- burial; that is to say the cable is loaded into the plough on the deck of the cable lay vessel and remains in the plough during deployment and recovery of the plough and throughout the lay operation. The wet weight of fibre-optic telecom cable is very low, so the tension in the cable during deployment is low. This means that deflecting the cable through the plough has little effect on the handling of the plough. In contrast a power cable has a top tension of up to 10 tonnes.

To date most power cable ploughs have been deployed from a separate vessel, landed over the cable and the cable is remotely loaded, on the seabed or beach, into the plough before ploughing commences. This method works adequately in some circumstances, but loading the cable is time consuming and costly and there is risk of damage to the cable during landing and loading.

Alternatively the cable plough can be deployed from a second vessel with the cable loaded on deck so that when it is deployed the cable has a flatter catenary, but this requires two vessels with cable handling capability throughout any ploughing job.

Also the cable path for simultaneous-lay-and-burial can make loading and jettisoning the cable on the seabed much more challenging.

It is an aim of the present invention to at least partly mitigate one or more of the above-mentioned problems.

It is an aim of certain embodiments of the present invention to provide a method and apparatus for providing a channel in a seabed and for laying an flexible elongate member such as a power cable, communication cable, umbilical or flexible pipe or the like in the channel.

It is an aim of certain embodiments of the present invention to provide a guide on a subsea plough that can be used to guide and support a cable during a ploughing and burying process and which has a wide degree of movement so that the plough can be lowered conveniently from a surface vessel and utilised on the seabed without over bending the cable.

It is an aim of certain embodiments of the present invention to enable a cable to be picked up and dropped off a plough in a convenient manner.

It is an aim of certain embodiments of the present invention to provide a subsea plough which includes a drawbar which can be used to provide tow points to tow the subsea plough along a seabed but which enables both a guide member such as a bellmouth to be raised and a cable supported by the plough to be selectively dropped from the plough if a plough malfunctions.

It is an aim of certain embodiments of the present invention to provide a subsea plough and method of use in which skids and/or a drawbar and/or a bellmouth are independently and selectively movable so as to provide a very versatile subsea plough.

According to one aspect of the present invention there is provided a subsea plough for providing a subsea channel, comprising:
a front end which faces a direction of towing, and a rear end;
a plough share member extending substantially perpendicular to a plough chassis and comprising a heel that extends in a plane substantially parallel to and spaced apart from a plane of the chassis that corresponds to a horizontal plane when the plough is stood level on a horizontal surface, wherein the plane of the chassis comprises a plane comprising a guide pivot axis; and
a pivotable guide member at the front end comprising an open mouth at a first end region of the guide member and a support surface for guiding bending of a flexible elongate element;
wherein the guide member is pivotable from the chassis about the guide pivot axis, the guide pivot axis being at a further end region of the guide member, characterised in that the guide member is pivotable into a plurality of orientations between a first extreme position, in which the guide member is inclined downwards below the plane of the chassis that corresponds to a horizontal plane when the plough is stood level on a horizontal surface, and a second extreme position, in which the guide member is inclined upwards above the plane of the chassis that corresponds to a horizontal plane when the plough is stood level on a horizontal surface.

In the first extreme position the guide member is inclined downwards more than 10° below the plane of the chassis and in the second extreme position the guide member is inclined upwards more than 20° above the plane of the chassis.

Aptly in the first extreme position the guide member is inclined downwards more than 20° below the plane of the chassis and in the second extreme position the guide member is inclined upwards more than 60° above the plane of the chassis.

Aptly a whole of the support surface of the guide member is spaced apart from the guide pivot axis at all orientations of the guide member.

Aptly the guide member comprises a first side wall member and a further side wall member spaced apart from the first side wall member; wherein
the first side wall member comprises a first end region proximate to the open mouth and a pivot bearing at a further end region of the first side wall member for supporting the guide member in a pivotable configuration and the further side wall member comprises a first end region proximate to the open mouth and a free end that moves with the first side wall member.

Aptly the guide member further comprises a connecting wall member that extends between the first and further side wall members at an upper edge region of each side wall member and provides an inner surface that at least partially provides the guide surface.

Aptly the guide member further comprises at least one locking element that selectively secures the flexible elongate element within the guide member or releases the flexible elongate element from the guide member.

Aptly said locking element comprises a plurality of pin elements arranged along a lower edge region of the first and further side wall members, each said pin element being locatable in a first position to close an open bottom of the guide member or in a further position to enable passage of the flexible elongate element into and out of the guide member.

Aptly the side walls of the guide member are arcuate and flare out proximate to the open mouth of the guide member.

Aptly the subsea plough further comprises a drawbar body comprising at least one pivot arm region that is pivotable about a drawbar pivot axis at a first end region of the drawbar body.

Aptly the drawbar body is pivotable into a nested position over the guide member to provide free passage downwards for a flexible elongate element as it is released from the guide member and is pivotable into a raised position to provide free passage to a flexible elongate element in the guide member when the guide member is located at said second extreme position. The drawbar body may be pivotable about the drawbar pivot axis into a position in which the drawbar body is inclined above the plane of the chassis, beyond the plane of the chassis.

Aptly the drawbar body is pivotable about the drawbar pivot axis in a plurality of orientations between a first extreme position in which the drawbar body is inclined downwards below the chassis plane to a second extreme position in which the drawbar body is inclined upwards above the chassis plane.

Aptly the subsea plough further comprises a first drawbar wing region extending from a first edge region of the drawbar body; and
a further drawbar wing region extending from a further edge region of the drawbar body.

Aptly the drawbar body further comprises a plurality of steering gear elements that locate and thereby steer the subsea plough, said gear elements being movable with the drawbar body as it pivots.

Aptly the plough share member is raked and comprises a forecutter element, the subsea plough further comprising: at least one jet nozzle for providing a jet of fluid from an underside region of the forecutter element.

According to a second aspect of the present invention there is provided a method for providing a subsea channel, comprising the steps of:
locating a subsea plough comprising a front end which faces a direction of towing, a rear end, and a plough share member that extends substantially perpendicular to a plough chassis and comprises a heel that extends in a plane substantially parallel to and spaced apart from a plane of the chassis that corresponds to a horizontal plane when the plough is stood level on a horizontal surface, wherein the plane of the chassis comprises a plane comprising a guide pivot axis, at a target location on a seabed together with a flexible elongate element;
towing the chassis and plough share member along the seabed where a channel is to be located;
cutting a channel in the seabed via the plough share member as the subsea plough is towed; and
as the subsea plough cuts the channel, guiding a curvature of the elongate flexible member to be laid in the channel via a guide member, said guide member being at the front end and being selectively pivotable about the guide pivot axis; characterised in that the guide member is pivotable into a plurality of orientations between a first extreme position, in which the guide member is inclined downwards below the plane of the chassis that corresponds to a horizontal plane when the plough is stood level on a horizontal surface, and a second extreme position, in which the guide member is inclined upwards above the plane of the chassis that corresponds to a horizontal plane when the plough is stood level on a horizontal surface;
wherein in the first extreme position the guide member is inclined downwards more than 10° below the plane of the chassis and in the second extreme position the guide member is inclined upwards more than 20° above the plane of the chassis.

Aptly the method further comprises depositing the flexible elongate element on the seabed by opening at least one locking element on an underside of the guide member.

Certain embodiments of the present invention provide a subsea plough and a method of using a subsea plough that includes a cable guide, such as a bellmouth, that can be pivoted through a wide range of rotatory orientations meaning that the plough works well in use and can be very conveniently used to drop a cable at a subsea location as well as being easy to load with a cable on a surface vessel and then lowered to a seabed location without harm to the supported cable.

Certain embodiments of the present invention provide the advantage that the Power Cable Plough:
- Can raise its bellmouth whilst deploying for simultaneous-lay-and-burial; and/or
- Can load or jettison the cable on the seabed; and/or
- Has a raked share design with forecutter for reliable burial; and/or
- Has an optimised rake angle to reduce overall tow forces; and/or
- Can lower its drawbar onto the seabed at shallow depth for improved cable path; and/or
- Provides improved shielded jetting.

Certain embodiments of the present invention permit the acquisition of the cable by the plough and the passage of the cable through the forward end of the plough in all phases of operation, including launch and recovery.

Certain embodiments of the present invention provide:
- Simplified and sympathetic power cable handling during operations and Launch & Recovery; and/or
- Optimised share, leading to reliable burial with minimised tow forces; and/or
- Simple loading and subsea unloading; and/or
- Base design supports optional subsea loading; and/or
- Proven steering system; and/or
- Simple reliable controls; and/or
- Robust machine designed for long life; and/or
- Designed for ease of operations and maintenance.

According to certain embodiments of the present invention the cross section of the plough share is symmetrical with a main forward raked share and a forecutter. This reduces drawbar pull, provides stability across the range of plough depths and improves performance when ploughing deep and fast in dilating sand. The forward rake angle and size of the share tips works in sympathy with the lowering drawbar at shallow plough depths so as not to cause excessive heel sinkage or friction.

The plough share according to certain embodiments of the present invention provides burial performance optimised for correct burial depth without skips, minimum drawbar pull and maximum forward speed, in excess of any existing equipment in service.

According to certain embodiments of the present invention a subsea plough is provided which can be towed via towing points mounted on a drawbar but whereby neither the drawbar nor chassis of the plough interfere with a flexible elongate element such as a cable or flexible pipe during certain procedures carried out by the plough. That is to say during a loading process in which the cable or flexible pipe is loaded onto the plough, and then the plough lowered into the sea and thereafter down towards the seabed, the cable or flexible pipe can be supported in the plough free of interference from the chassis or drawbar. This helps ensure that a minimum bend radius of the cable or flexible pipe is not exceeded since the cable or flexible pipe passes almost in a linear fashion through the plough. Likewise during use on a seabed, in a situation where a plough malfunctions, the cable or flexible pipe can be dropped from the bottom of the plough unhindered by the chassis or drawbar. This enables the plough to subsequently be removed leaving the cable or flexible pipe undamaged on the seabed for further use.

Embodiments of the present invention will now be described hereinafter, by way of example only, with reference to the accompanying drawings in which:
Figure 1 illustrates a subsea plough;
Figure 2 illustrates a subsea plough on a vessel being loaded with a power cable;
Figure 3 illustrates a subsea plough with a power cable passing through it in an almost linear fashion;
Figure 4 illustrates another view of the plough shown in Figure 3;
Figure 5 illustrates a plough landed on a seabed;
Figure 6 illustrates a plough being towed as the plough share digs to a shallow depth into the seabed;
Figure 7 illustrates the plough digging a deep channel in a seabed;
Figure 8 illustrates steering of a subsea plough;
Figure 9 illustrates how a power cable or other such flexible elongate object can be dropped from a subsea plough;
Figure 10 illustrates how a guide member such as a bellmouth can be dropped below a plane of a chassis of a plough;
Figure 11 illustrates a front view of a plough and how skids of the plough can be independently moved up and down and how a power cable can be supported in a guide member;
Figure 12 illustrates connection between a drawbar and a skid support; and

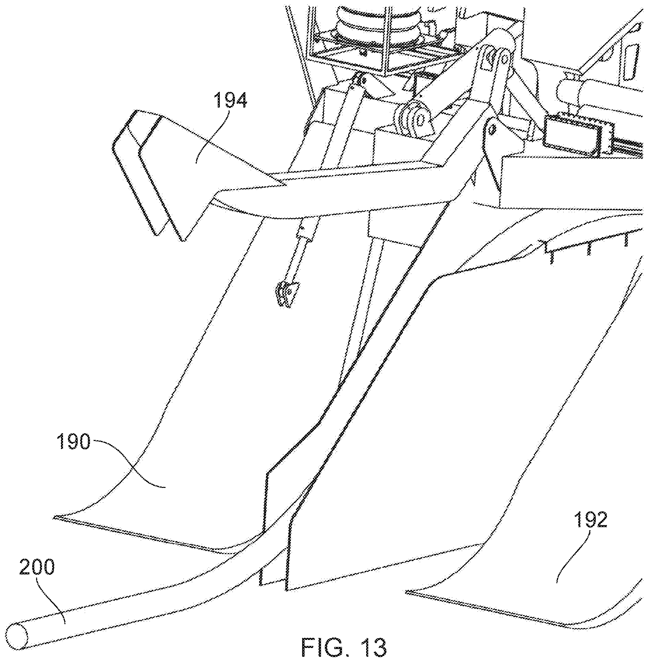

Figure 13 illustrates rear view of a plough share and how a power cable passes over a plough share guide towards the rear of a subsea plough.

In the drawings like reference numerals refer to like parts.

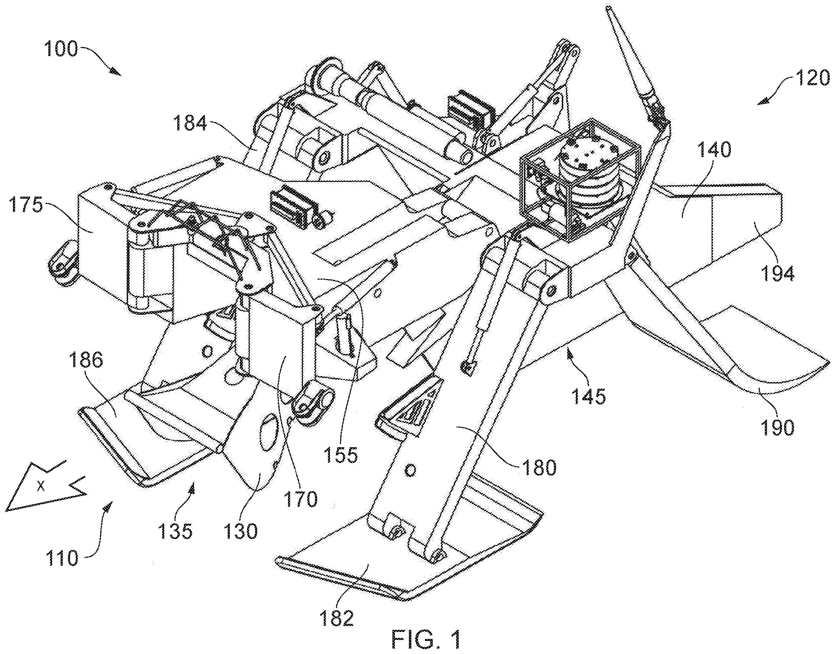

Figure 1 illustrates a subsea plough 100. The subsea plough is suitable for providing a subsea channel at a surface of a subsea seabed location. The subsea channel can be utilised to bury a flexible elongate element such as a power cable. Whilst certain embodiments of the present invention are described hereinafter with respect to a power cable it will be appreciated that certain embodiments of the present invention are usable with a wide variety of flexible elongate elements such as an umbilical, flexible pipe or telecommunication cable or the like.

As illustrated in Figure 1 the subsea plough 100 has a front end 110 which faces a direction of towing and a rear end 120 so that a plough in use is towed generally speaking in a direction illustrated by the arrow x in Figure 1.

The subsea plough 100 includes a pivotable guide member 130 which has an open mouth 135 and a plough share 140 which includes a heel 145. The heel 145 is flat and defines a plane associated in use with the plane of a seabed which the plough will rest on and cut through.

The subsea plough 100 also includes a drawbar body 155 which is pivotable via a pivot arm of the body about a pivot axis at a first rear end of the drawbar body. A port side wing region extends from the drawbar body and a starboard wing region extends from the drawbar body. At the front of the drawbar body is a port side steering arm 170 which carries a respective port side tow point and a starboard side steering arm 175 which supports a respective starboard tow point. The tow points each provide a pull point for a respective cable of a bridle which is connected to the plough for lowering the plough to the seabed and subsequently pulling the plough along the seabed to provide the channel. It will be appreciated that the bridle which is connected to a single cable is pulled by a surface vessel.

Figure 1 also helps illustrate how a port side pivotable skid support 180 supports a respective port side pivotable skid 182 and a starboard side skid support 184 supports a respective starboard skid 186. These skids are surface engaging elements which can help support the plough on a surface.

Figure 1 also helps illustrate how a port side stabiliser 190 and starboard side stabiliser 192 (not shown in Figure 1) can be used to help stabilise the plough during use. Figure 1 also helps illustrate how a depressor 194 can be located over a rear channel in the plough share 140 to help determine how a cable passing through the plough is directed as it leaves the plough.

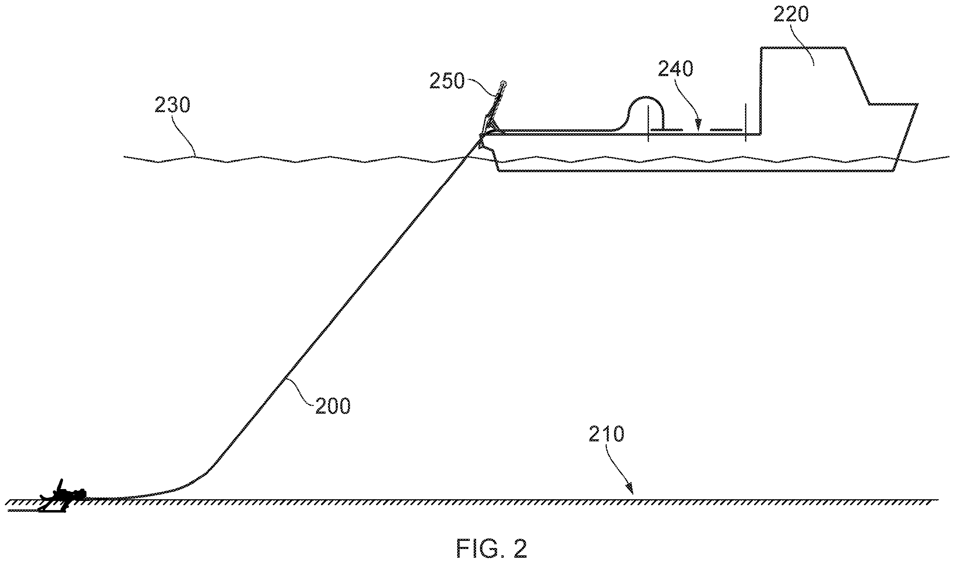

Figure 2 helps illustrate a subsea location and how a cable 200 from a seabed 210 can be lifted to a surface vessel 220 floating on the surface 230 of the sea. The cable can be lifted via conventional techniques onto a deck 240 of the vessel 220 where it is loaded into the subsea plough 100. Thereafter the plough together with the loaded cable 200 can be lowered via a vessel crane 250 back down to the seabed. Upon touch down on the surface 210 the cable and bridle used to lower the plough can thereafter be used by the vessel to tow the plough along the seabed providing a channel and thereafter burying the cable in the channel.

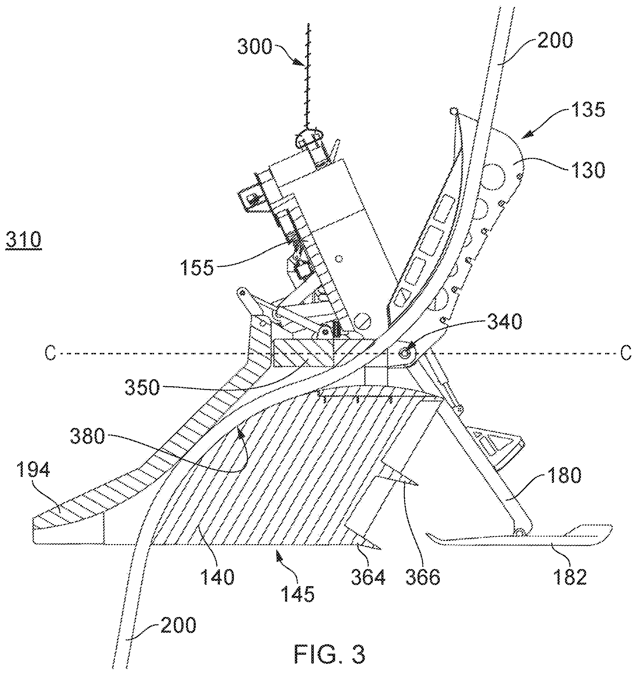

Figure 3 helps illustrate a side view of the subsea plough 100 subsequent to it being lifted from the surface 240 of a vessel and as it is lowered down through the sea water via a tow line 300. As illustrated in Figure 3 as the plough is lowered through the body of sea water 310 the pivotable drawbar 155 and pivotable guide 130 at the front of the plough are pivoted into an extreme raised position. The guide member as illustrated in Figure 3 is a bellmouth having a flared open mouth 135 and an arcuate support surface 330 as illustrated in Figure 3 the bellmouth is able to pivot, about a respective guide pivot axis 340, above a plane defined by the chassis 350 of the plough. The plane is illustrated by the dash line C-C in Figure 3. The chassis plane broadly corresponds to a horizontal plane when the plough is stood level on a horizontal surface. It will be appreciated that if the plough is slightly tipped during use the chassis plane will not exactly correspond with a truly horizontal plane.

As illustrated in Figure 3 the bellmouth which is an example of a pivotable guide member can pivot into a near vertical direction. The pivoting is driven by an actuator (not shown in Figure 3).

Figure 3 also helps illustrate how the drawbar 155 can likewise be pivoted significantly above the chassis plane. As illustrated in Figure 3 the drawbar may be pivoted to more than 90° away from the chassis plane. As a result of this pivoting ability the tow point 360 during which the plough can be dropped to the seabed surface from a surface bound vessel lies substantially above a centre of gravity point of the plough. Additionally the drawbar does not in any way interfere with the cable 200 as the plough is submerged.

Figure 3 also illustrates how a front leading edge 362 of the plough share includes at least one main raked tip 364 and a forecutter 366. Figure 3 also helps illustrate how the plough share 140 also includes an arcuate plough share guide surface 380 which is a supporting surface for the cable to rest on as it passes from the front towards the rear of the subsea plough 100. It will be apparent to those skilled in the art that the cable 200 passes through the subsea plough 100 in an almost linear fashion in this configuration. Certainly the two bend points on the cable are supported and provide a bend radius well above any defined minimum bend radius (MBR) designated for the cable 200.

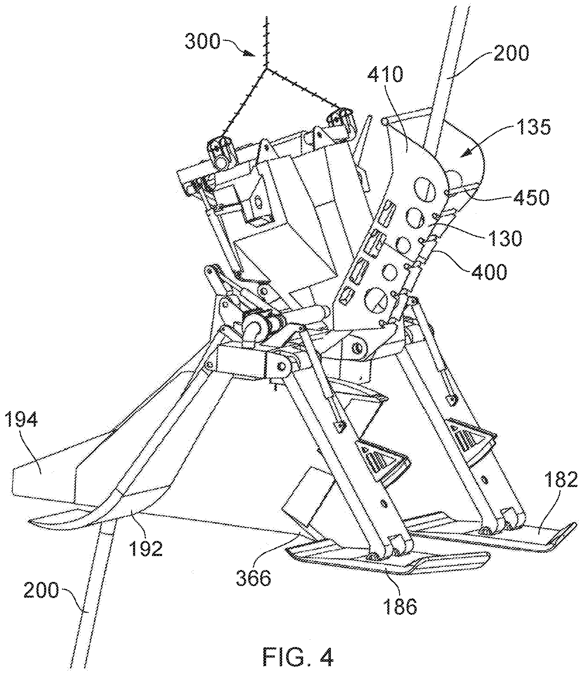

Figure 4 helps illustrate the subsea plough 100 shown in Figure 3 with an isometric view and shows more clearly how the power cable 200 passes through the open mouth 135 of the bellmouth 130, through the plough and drops out between the depressor 194 and a rear edge of the plough share. Figure 4 also helps illustrate the spaced apart starboard side skid 186 and port side skid 182 and a starboard side stabiliser 192.

Figure 4 helps illustrate how the bellmouth 130 is formed from a first side wall 400 and a spaced apart further side wall 410. Each side wall is perforated with through apertures to permit easy flow of sea water through the bellmouth. At an upper edge of the two opposed side walls a connecting wall 420 closes a top of the bellmouth. The connecting wall extends between the first and further side wall members at an upper edge region of each side wall member and an inner surface of the connecting wall provides an arcuate guide surface for the bellmouth. As illustrated in Figure 4 a row of locking pins 450 extend across a lower edge of each side wall. The locking pins can be selectively closed or opened to release a cable from the bellmouth or to secure the cable in the bellmouth. The outer surface of the pins which are arranged in a row provide an effective further support surface.

As illustrated in Figure 4 one side wall 400 of the bellmouth extends to a bearing which supports the bellmouth and enables it to be pivoted with respect to a pivot axis. The rear end of the further side wall 410 is a free end and moves with the first side wall and connecting side wall. As a result a cable 200 carried in the bellmouth when the bellmouth is raised into a very elevated position of a type shown in Figure 4 can pass beyond the pivot point of the bellmouth. This helps ensure that over bending of the cable does not occur.

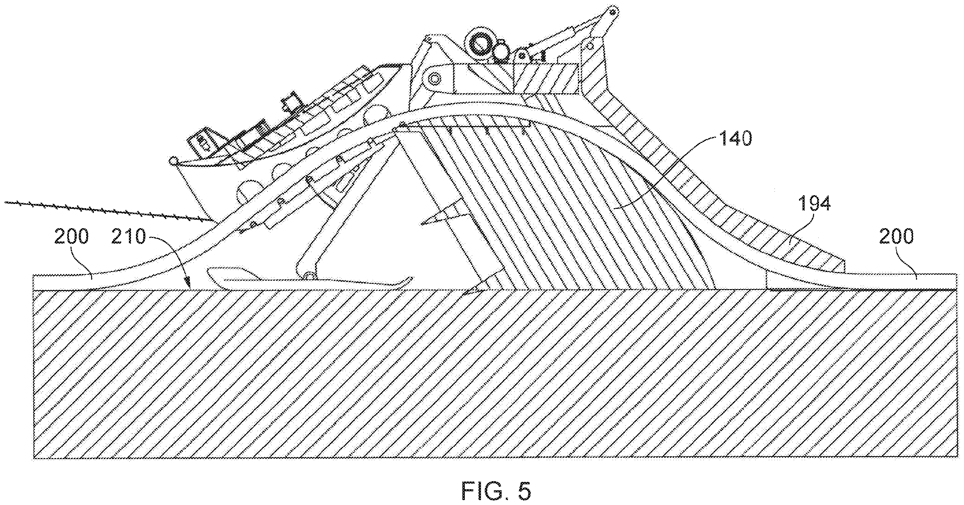

Figure 5 helps illustrate the subsea plough 100 on the sea bed 210. This configuration is illustrative of a point in time where the subsea plough has been lowered from the vessel 210 until the skid and stabilisers and heel of the share rest on the sea bed. In this orientation the heel of the share and the lower surface of each skid and stabiliser lie in a common substantially horizontal plane spaced apart from and substantially parallel with the plane associated with the chassis of the plough.

Subsequent to touch down the guide member 130 and drawbar 155 are lowered into an orientation in which they are both dipped. The bellmouth 130 nests in between wings of the drawbar. The tow line 300 remains secured to the pull points but as the vessel sails away from the touch down point the tow line dips into a catenary shape meaning that the end of the tow line extends off into an almost horizontal direction towards the front of the plough. In practice the surface vessel may be more than 1km or even 2 km ahead of the plough at this point in time. By selectively and independently dipping the drawbar the pull points of the plough can be brought close to the seabed 210.

Figure 5 also helps illustrate how the secondary guide surface of the bellmouth provided by the upper surface of the locking pins and the share guide surface of the plough share support the cable into a smoothly curved configuration ensuring that the cable is not over bent.

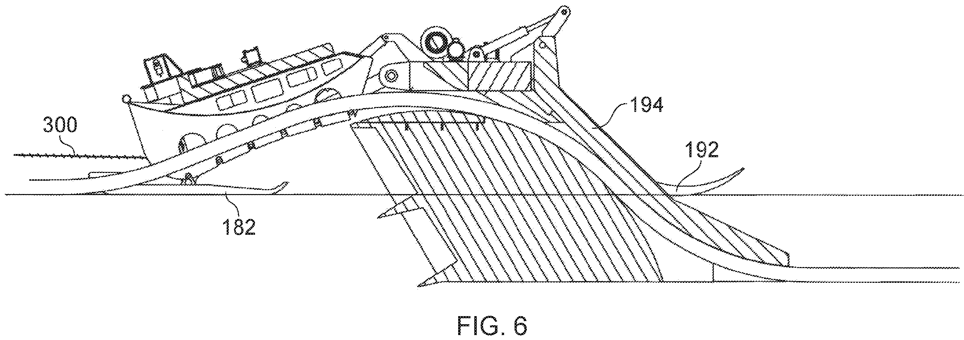

Figure 6 helps illustrate how the subsea plough 100 can be towed through the surface with the skids (the port skid 182 shown in Figure 6) resting and running on the seabed. As the towing commences and continues the leading edge of the share digs into the seabed and begins to create a channel in the seabed. It will be appreciated that to enable the plough to reach this configuration the skid supports are pivoted with respect to the plough chassis. The pivoting is a pivoting in the upward direction with respect to the configuration of the skid supports shown in Figure 5. Likewise in Figure 6 the bellmouth 130 and drawbar are likewise tilted upwards from the Figure 5 orientation (although still they remain tilted below the plane of the chassis). The skid supports and bellmouth and drawbar are all independently pivotable. Aptly during ploughing the skid supports and bellmouth and drawbar move as one. The drawbar provides pull points close to the surface of the seabed. As illustrated in Figure 6 the channel dug in the seabed can receive the cable which is duly located at a bottom of the channel by the pivotable depressor 194. Again in the configuration shown in Figure 6 the guide member formed as a bellmouth supports the cable at the front of the plough although the weight of the cable means that in such a configuration as in the configuration shown in Figure 5 the cable rests on the locking pins arranged along the lower edge of the bellmouth to provide a secondary guide surface. The cable passes under the main chassis body and is supported by the share guide surface as it drops into the channel.

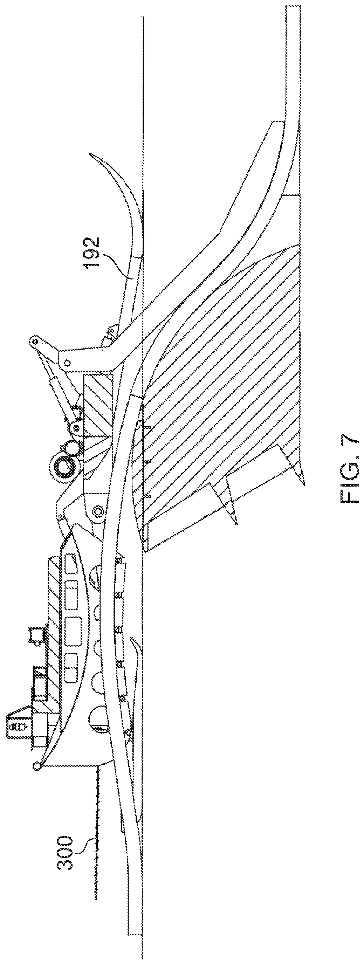

Figure 7 illustrates the subsea plough being towed in a manner in which the plough share is dug into its greatest depth to bury a cable at the greatest possible depth possible for the subsea plough shown. As illustrated in Figure 7 the skid supports, bellmouth and drawbar are pivoted upwards into a near horizontal configuration almost into the plane of the chassis of the subsea plough. The locking pins of the bellmouth support the cable into the body of the plough and thereafter the cable is supported by the curved plough share guide as it drops into the channel. The rear stabilisers shown in Figure 7 are likewise raised into an almost horizontal configuration so that the plough adopts an almost horizontal facing configuration with respect to the sea bed. The plough share 140 of course extends substantially perpendicular to such a plane. Again as illustrated in Figure 7 the pull points on the drawbar remain close to the surface of the sea bed.

As will be appreciated by those skilled in the art Figures 5, 6 and 7 thus illustrate how by independently pivoting the skid arm supports and stabilisers and bellmouth and drawbar of the plough a wide variety of depths can be dug into a sea bed whilst ensuring that a minimum bend radius is not exceeded for a cable being laid.

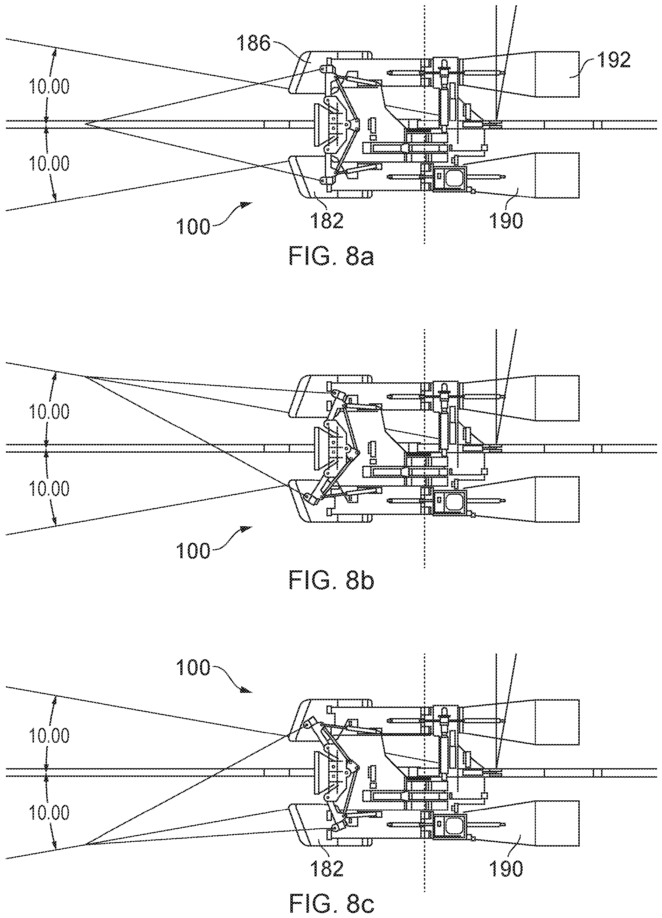

Figure 8 helps illustrate steering of the subsea plough 100. In more detail Figure 8a illustrates how the subsea plough 100 can be towed from a directly forward position so as to dig a trench and lay a cable in the trench in a straight line. The two spaced apart pull points supported on respected steering arms are each connected to a strand of a bridle connected together in front of the plough which then leads to the single tow line which is towed by the vessel. The cable 200 is illustrated passing through the plough going first through the bellmouth and then passing out through the back of the share between the share and the depressor.

Figure 8b helps illustrate how the plough can be turned towards port. This is done by selectively activating actuators which form parts of the steering elements to pull the steering arms into desired pivoted positions. Pulling the steering arms means that the respective pull points move likewise. In this way the strands of the bridle can be pulled and towing thus causes motion off a central axis of the plough. Figure 8c likewise illustrates how actuation of one or more steering arms can be used to steer the subsea plough to port.

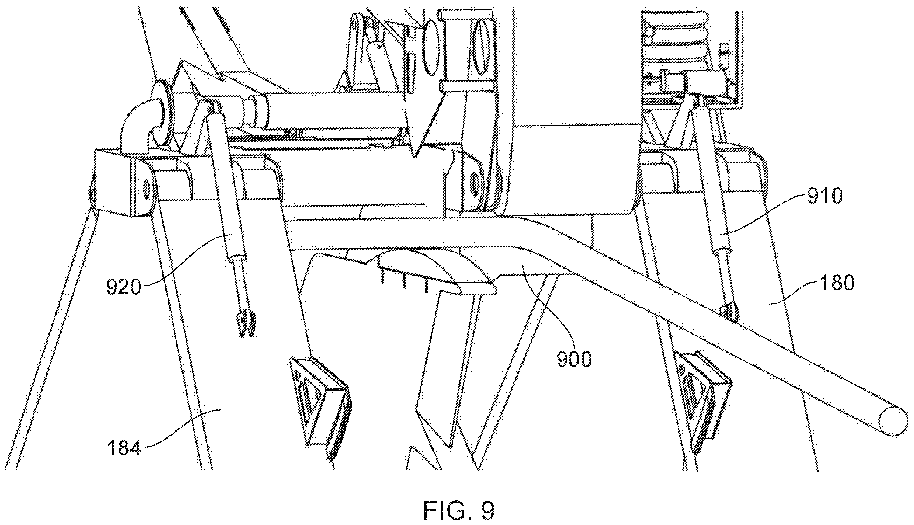

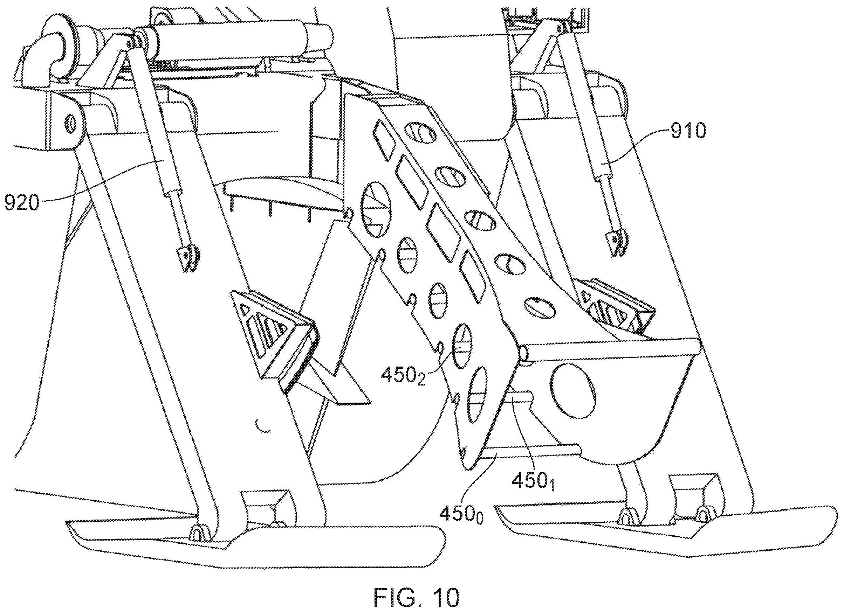

Figure 9 helps illustrate how parts of the chassis 900 and the asymmetric connector that connects the plough share 140 to the chassis 900 are located above the cable in use. The guide member 130 is not shown in Figure 9 for the purposes of convenience whereas the guide member 130 is illustrated in the corresponding Figure 10 but without the cable. Figure 9 also helps illustrate the actuators which can be utilised to selectively pivot the skid supports up and down in an independent fashion. That is to say the skid supports can move independently of each other and also independently of the drawbar or guide member. As illustrated in Figure 9 a port side skid arm 180 is moved by a hydraulic actuator 910 and a starboard side skid support 184 is raised and lowered by a respective hydraulic actuator 920. Figure 9 helps illustrate how the cable can be dropped to a seabed in the event of a malfunction of the subsea plough. Such malfunction may occur because of failure of any of the component parts of the subsea plough assembly although we appreciated that such failure is unlikely. In any event if failure does occur which is not rectifiable it will be appreciated that the cable should be saved if at all possible. For this purpose the locking pins 450₀₋₅ (better shown in Figure 10) can selectively be unlocked. By releasing these locking pins the effective support surface provided by the outer surface of the pins is removed and the gravitational weight of the cable causes the cable to drop downwards towards the seabed where it then lands on the seabed. The cable can thereafter be tipped to one side to ensure that it is detached from the guide surface of the plough share and/or to ensure that the plough no longer contains the cable. The plough can thereafter be lifted away from the failure site and recovered or merely abandoned. Subsequently the cable can be recovered and refitted to a repaired plough as previously discussed.

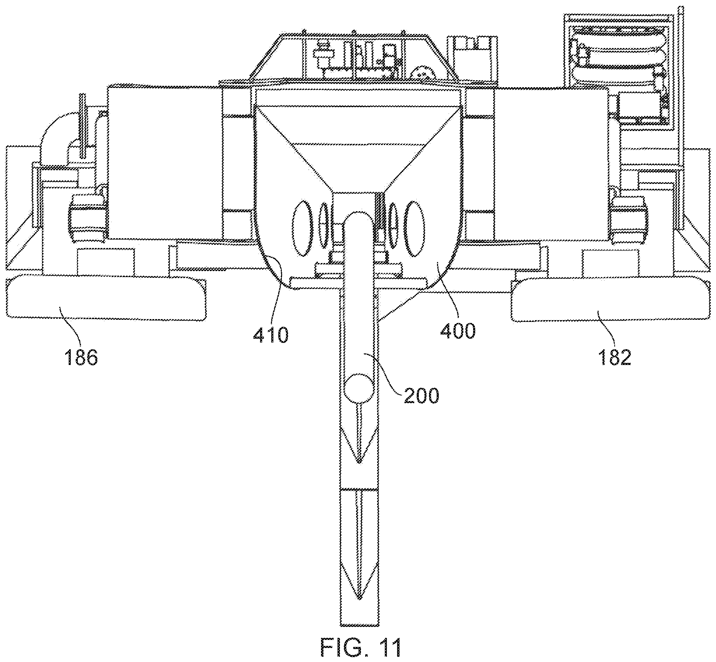

Figure 11 illustrates a front on view of the plough in a configuration in which the skids are substantially drawn up into an almost horizontal configuration as is the guide member and drawbar. Figure 11 helps illustrate how the cable 200 passes into the open mouth of the bellmouth where it is supported on the effective surface provided by the locking pins. Figure 11 also helps illustrate how the skid support arms and skids on the ends of the skids support arms can independently be lifted.

The figures shown convey:
- Multiple forward raked cutters;
- Aft raked share; and
- Shielded jetting.

Nozzles in the underside of the fore cutters allow water to be jetted into the failing soil to flood voids and further increase performance, particularly in dilating sands.

The jetting scheme allows the upper nozzles to be shut off independently of the lower nozzles.

Jetting with a raked share allows 'shielding' of the jet nozzles under the forecutters, which also serves to direct the water into the area of maximum soil shear.

The upper share nozzle plenum is equipped with a hydraulic actuated slide valve and the higher water pressure on the supply side actuates the seal. The feed orifice area for the upper share nozzles is adjustable to allow the relative flow to the upper share nozzles to be trimmed if necessary. The plenum to lower share is always open.

Certain embodiments of the present invention utilise 'shielded' nozzles, meaning that nozzles will not tend to block if not flowing water.

The variable nozzle system may be setup to support the change in flow from shallow to deep water use and may also be setup to give further adjustment to support the change in effective flow rates when the plough is working at shallow ground engagement.

Certain embodiments of the present invention provide for a cable passage in which:
- 5m MBR compliance throughout, including bellmouth upper and lower surfaces;
- Designed for 300mm cable throughout;
- Forward bellmouth with raise/lower functionality and lower opening for load/unload;
- Cable ejection feature at highest point of share cable passage; and
- Depressor.

The plough can be utilised with a stiff heavy power cable with a minimum bend radius of 5m.

Aptly the Bellmouth is a light-weight structure that is pivoted from the chassis coaxially with the Drawbar.

The Bellmouth is articulated on a lightweight cylinder and is then retained more robustly in the vertical and transverse planes during operations by the drawbar fabrication. The Power Cable enters the front of the bellmouth close to the ground in the conventional manner and passes back to the overbend at the top of the share passage. It passes through, or close to the pivot axis of the bellmouth.

During launch and recovery for simultaneous lay and burial operations where the cable is loaded into the plough on the deck of the lay-vessel, the bellmouth upper surface is allowed to rest on the cable and be lifted upwards to follow it.

Since the power cable is now able to pass through the Bellmouth pivot axis, there is very little load imposed on the bellmouth by the cable, it also and most significantly reduces the length of the plough forward of the lift point; this has important handling system implications, particularly as the lay vessel requires a large diameter stern chute, which reduces plough stern clearance.

The Bellmouth is configured for bottom loading and unloading.

The upper side is arranged to mate closely with the Drawbar saddle, providing the necessary structural integrity during ploughing operations. The bellmouth and the drawbar share a common pivot axis and the relative position ensures close alignment at all burial depths.

The Drawbar Assembly is pivoted from the front edge of the chassis on the port side. It is positioned by hydraulic cylinders which extend over the rear of the chassis, predominantly on the port side. It is able to travel over a wide arc between the raised for recovery position to a little beyond the shallow burial position.

The Drawbar fabrication carries the Tow arms and steering arrangement. The towpoints are mounted on swivels at the outboard ends of the Tow arms, and are positioned close to the ground level. The position close to the ground level at all burial depths is a critical component in minimizing the moment which tends to lift the share out of work, or restrict its ability to penetrate the ground.

The Plough for use with a power cable or the like is equipped with skids and stabilisers. These serve the ploughing functions of support and depth control. However since the Skid Arms are supported and guided at their lower/most forward ends by the Drawbar Assembly, the majority of the Skid Arm is defined by the need to support the plough in the out of work or on-deck configurations; the depth control and in-work loads being carried by the drawbar.

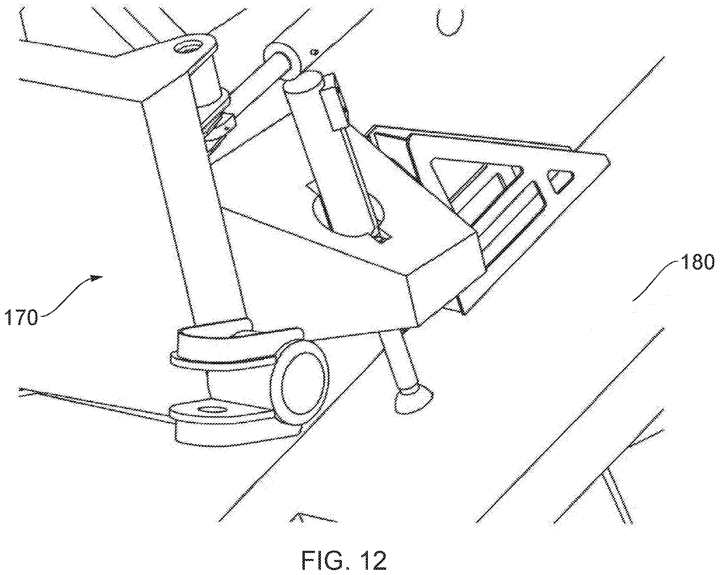

The Skid/Drawbar interface is illustrated in Figure 12, transverse loads are carried from the skid arm into the Drawbar by the quadrant plate located on the inside edge of the skid arm. This runs between thrust pads mounted on the drawbar, in the manner of a disc brake calliper. Generous tapering on both the quadrant and calliper ensure smooth re-entry of the quadrant. This transverse restraint, located close to the skid significantly reduces the loads carried through the skid connection to the chassis and provides a more direct route for the transverse loads to be reacted.

As previously described depth control is effected by the drawbar bearing on the lower ends of the skid arms, this works well on nominally flat seabed, but to accommodate working across side slopes which is not uncommon in sand wave areas, the skids can be individually depressed away from the drawbar contact pad face. This is effected by the hydraulic cylinder mounted in the drawbar arms on each side. It is trunnion mounted and features a ball on the rod end which engages with a hemispherical pocket in the skid arm. This allows approximately 0.5m difference between port and starboard skid heights.

The aft stabilisers can be positioned independently to match or can be floated as required.

The configuration of ball and socket is illustrated in Figure 12 and this facilitates a compressive connection through the full range of the cylinder deployment and ploughing depths. The transverse load quadrant remains engaged in the callipers and so the ball joint interface is only required to transmit a direct compressive load.

During Recovery and other operational stages where the skids are intentionally not in contact with the drawbar arms, the cylinder is retracted and the ball drawn into a locating cup in the underside of the drawbar. This ensures that the cylinder is firmly located when not actuating the skid.

When 'locked-in' to the quadrant guide, the skids are designed to deflect boulders up to 0.5m in size. In Figure 1 it can be seen that the leading edge of the skids is angled gently outwards, to promote the deflection of larger diameter boulders away from beneath the skids.

To facilitate cable loading on deck the plough starboard skid and stabiliser raise in turn to allow the power cable to be passed beneath; the plough being supported in a stable condition with either one raised sufficient for this without the need for additional support.

The skids and rear stabilisers are mounted off the transverse chassis beam, the stabilisers can be operated together or independently and provide additional bearing support for the aft end of the plough.

The chassis includes the primary transverse beam which spans the width of the plough, and carries the Drawbar, Bellmouth Skids and Stabilisers. On the starboard side the chassis transverse beam is sculpted over the share to facilitate unrestricted cable loading. The cable loading aperture is illustrated.

The Chassis is connected to the share through the portside share side plate.

An actuated burial depth arm (not shown in the figures) is installed on the port side close in to the share.

The share includes mounts to accommodate a beach skid and the rear edges of the skids are flared upwards to facilitate towing backwards up a beach.

Although it is not shown in the figures the hydraulic system is distributed across the plough, the HPU is located on the aft port quarter of the plough above the chassis, along with the pod and umbilical termination.

The Drawbar is equipped with local instrumentation node and hydraulic valve tank for the installed surveillance, instrumentation and functions.

The remainder of the plough surveillance and instrumentation package is distributed and supported across the upper surfaces of the plough.

The Plough is configured for cable loading and unloading from the starboard side. It can of course optionally be provided port side loading and unloading if this better suits the layout of the wider cable lay spread.

On deck the drawbar and bellmouth is raised and the cable loaded as follows. Note that the depressor is slewed laterally to provide a clear vertical path able the cable for craneage etc. The skid and stabiliser may each be articulated to 'feed' the cable into the plough.

Note the overall open design for ease of cable loading. On the seabed the cable may be unloaded from the plough by opening the drawbar, then lifting the drawbar/bellmouth and depressor as for loading. The cable is then ejected by rotating the overbend section of the cable passage. This can be commanded from the control system, with or without hydraulic power. If there is a failure of the control system, the bellmouth and trough can be actuated by ROV to unload the cable.

A loading sequence is as follows:
1. Land the plough with the cable between the skids and to the starboard of the share;
2. Lift the depressor and slew to port to give clear loading access over the share;
3. Lower the trough to 45 degrees;
4. Raise the drawbar and bellmouth fully;
5. Reach forward between the skids and pick up the cable;
6. Extend the crane boom forwards in front of the bellmouth with the cable approximately horizontal;
7. Open the bellmouth;
8. Lower the bellmouth over the cable and close it securing the cable;
9. Release the cable from the crane grab;
10. Cable is retained in the bellmouth;
11. Lift the cable from the seabed at the rear of the plough until it is resting in the trough;
12. Raise the trough taking the cable with it;
13. Lower the cable into the rear of the share;
14. Release the grab and park the crane;
15. Slew the depressor back over the cable and lower onto the cable in the share; and
16. The cable is loaded ready for ploughing.

To ensure that the cable minimum bend radii is protected when the cable is being lifted by the crane a three jaw cable grab may be used. The cable grab is fitted to the head of the knuckle boob crane with a pivot and a hydraulic rotator. The rotator is used to orient the grab over the cable. The central jaw is fixed to the grab, the two outlying grabs are pivoted on arms from the central beam. When the grabs are opened and placed on the ground the two outer grabs are free to pivot up to capture the cable. As the crane lifts the suspended grab, the two outer arms pivot down conforming to the minimum bend radii of the cable.

## Claims

1. A subsea plough (100) for providing a subsea channel, comprising:
a front end (110) which faces a direction of towing and a rear end (120);
a plough share member (140) extending substantially perpendicular to a plough chassis (900) and comprising a heel (145) that extends in a plane substantially parallel to and spaced apart from a plane of the chassis that corresponds to a horizontal plane when the plough (100) is stood level on a horizontal surface, wherein the plane of the chassis comprises a plane comprising a guide pivot axis (340); and
a pivotable guide member (130) at the front end comprising an open mouth (135) at a first end region of the guide member (130) and a support surface for guiding bending of a flexible elongate element (200);
wherein the guide member (130) is pivotable from the chassis about the guide pivot axis, the guide pivot axis being at a further end region of the guide member (130),
**characterised in that** the guide member (130) is pivotable into a plurality of orientations between a first extreme position, in which the guide member (130) is inclined downwards below the plane of the chassis that corresponds to a horizontal plane when the plough is stood level on a horizontal surface, and a second extreme position, in which the guide member (130) is inclined upwards above the plane of the chassis that corresponds to a horizontal plane when the plough is stood level on a horizontal surface; wherein
in the first extreme position the guide member (130) is inclined downwards more than 10° below the plane of the chassis (900) and in the second extreme position the guide member (130) is inclined upwards more than 20° above the plane of the chassis (900).

2. The subsea plough (100) of claim 1, wherein in the first extreme position the guide member (130) is inclined downwards more than 20° below the plane of the chassis (900) and in the second extreme position the guide member (130) is inclined upwards more than 60° above the plane of the chassis (900).

3. The subsea plough (100) as claimed in any preceding claim, further comprising:
a whole of the support surface of the guide member is spaced apart from the guide pivot axis at all orientations of the guide member (130).

4. The subsea plough (100) as claimed in any preceding claim, further comprising:
the guide member (130) comprises a first side wall member (400) and a further side wall member (410) spaced apart from the first side wall member (400); wherein
the first side wall member (400) comprises a first end region proximate to the open mouth (135) and a pivot bearing at a further end region of the first side wall member (400) for supporting the guide member (130) in a pivotable configuration and the further side wall member (410) comprises a first end region proximate to the open mouth (135) and a free end that moves with the first side wall member (400), and optionally, wherein the guide member (130) further comprises a connecting wall member (420) that extends between the first and further side wall members (400, 410) at an upper edge region of each wall member (400, 410) and provides an inner surface that at least partially provides the guide surface.

5. The subsea plough (100) as claimed in claim 4, further comprising:
the guide member (130) further comprises at least one locking element (450) that selectively secures the flexible elongate element (200) within the guide member (130) or releases the flexible elongate element (200) from the guide member (130).

6. The subsea plough (100) as claimed in claim 5, further comprising:
said locking member (450) comprises a plurality of pin elements (450₀₋₅) arranged along a lower edge region of the first and further side wall members (400, 410), each said pin element (450₀₋₅) being locatable in a first position to close an open bottom of the guide member (130) or in a further position to enable passage of the flexible elongate element (200) into and out of the guide member (130).

7. The subsea plough (100) as claimed in any one of claims 4 to 6, further comprising:
the side walls (400, 410) of the guide member (130) are arcuate and flare out proximate to the open mouth (135) of the guide member (130).

8. The subsea plough (100) as claimed in any preceding claim, further comprising:
a drawbar body (155) comprising at least one pivot arm region that is pivotable about a drawbar pivot axis at a first end region of the drawbar body (155).

9. The subsea plough (100) as claimed in claim 8, further comprising:
the drawbar body (155) is pivotable into a nested position over the guide member (130) providing free passage downwards for a flexible elongate element (200) as it is released from the guide member (130) and is pivotable into a raised position providing free passage to a flexible elongate element (200) in the guide member (130) when the guide member (130) is located at said second extreme position,
and optionally, wherein the drawbar body (155) is pivotable about the drawbar pivot axis into a position in which the drawbar body (155) is inclined above the plane of the chassis (900);
and further optionally, wherein the drawbar body (155) is pivotable about the drawbar pivot axis in a plurality of orientations between a first extreme position in which the drawbar body is inclined downwards below the plane of the chassis (900) to a second extreme position in which the drawbar body (155) is inclined upwards beyond the plane of the chassis (900).

10. The subsea plough (100) as claimed in any one of claims 8 to 9, further comprising:
a first drawbar wing region extending from a first edge region of the drawbar body (155); and
a further drawbar wing region extending from a further edge region of the drawbar body (155).

11. The subsea plough (100) as claimed in any one of claims 8 to 10, further comprising:
the drawbar body (155) further comprises a plurality of steering gear elements that locate and thereby steer the subsea plough (100), said gear elements being movable with the drawbar body (155) as it pivots.

12. The subsea plough (100) as claimed in any preceding claim, wherein the plough share (140) is raked and comprises a forecutter element (366), the subsea plough (100) further comprising:
at least one jet nozzle for providing a jet of fluid from an underside region of the forecutter element (366).

13. A method for providing a subsea channel, comprising the steps of:
locating a subsea plough (100), comprising a front end (110) which faces a direction of towing, and a rear end (120), and a plough share member (140) that extends substantially perpendicular to a plough chassis (900) and comprises a heel (145) that extends in a plane substantially parallel to and spaced apart from a plane of the chassis that corresponds to a horizontal plane when the plough is stood level on a horizontal surface, wherein the plane of the chassis comprises a plane comprising a guide pivot axis, at a target location on a seabed (210) together with a flexible elongate element (200);
towing the chassis (900) and plough share member (140) along the seabed (210) where a channel is to be located;
cutting a channel in the seabed (210) via the plough share member (140) as the subsea plough (100) is towed; and
as the subsea plough (100) cuts the channel, guiding a curvature of an elongate flexible member (200) to be laid in the channel via a guide member (130), said guide member (130) being at the front end and being selectively pivotable from the chassis about the guide pivot axis;
**characterised in that** the guide member (130) is pivotable into a plurality of orientations between a first extreme position, in which the guide member (130) is inclined downwards below the plane of the chassis that corresponds to a horizontal plane when the plough is stood level on a horizontal surface, and a second extreme position, in which the guide member (130) is inclined upward above the plane of the chassis that corresponds to a horizontal plane when the plough is stood level on a horizontal surface;
wherein in the first extreme position the guide member (130) is inclined downwards more than 10° below the plane of the chassis (900) and in the second extreme position the guide member (130) is inclined upwards more than 20° above the plane of the chassis.

14. The method as claimed in claim 13, further comprising: depositing the flexible elongate element (200) on the seabed (210) by opening at least one locking element (450) on an underside of the guide member (130).

## Patentansprüche

1. Unterwasserpflug (100) zum Bereitstellen eines Unterwasserkanals, umfassend:
ein vorderes Ende (110), das einer Schlepprichtung zugewandt ist, und ein hinteres Ende (120);
ein Pflugscharelement (140), das sich im Wesentlichen senkrecht zu einem Pflugchassis (900) erstreckt und umfassend einen Absatz (145), der sich in einer Ebene erstreckt, die im Wesentlichen parallel zu und beabstandet von einer Ebene des Rahmens ist, die einer horizontalen Ebene entspricht, wenn der Pflug (100) eben auf einer horizontalen Fläche steht, wobei die Ebene des Chassis eine Ebene umfassend eine Führungsschwenkachse (340) umfasst; und
ein schwenkbares Führungselement (130) an dem vorderen Ende, umfassend eine offene Mündung (135) an einem ersten Endbereich des Führungselements (130) und eine Stützfläche zum Führen eines Biegens eines flexiblen länglichen Elements (200);
wobei das Führungselement (130) von dem Chassis um die Führungsschwenkachse schwenkbar ist, wobei die Führungsschwenkachse in einem weiteren Endbereich des Führungselements (130) ist,
**dadurch gekennzeichnet, dass** das Führungselement (130) in eine Vielzahl von Ausrichtungen zwischen einer ersten Extremposition, in der das Führungselement (130) nach unten unter die Ebene des Chassis, die einer horizontalen Ebene entspricht, wenn der Pflug eben auf einer horizontalen Fläche steht, geneigt ist, und einer zweiten Extremposition, in der das Führungselement (130) nach oben über die Ebene des Chassis, die einer horizontalen Ebene entspricht, wenn der Pflug eben auf einer horizontalen Fläche steht, geneigt ist, schwenkbar ist; wobei
das Führungselement (130) in der ersten Extremposition um mehr als 10° unter die Ebene des Chassis (900) nach unten geneigt ist und das Führungselement (130) in der zweiten Extremposition um mehr als 20° über die Ebene des Chassis (900) nach oben geneigt ist.

2. Unterwasserpflug (100) nach Anspruch 1, wobei das Führungselement (130) in der ersten Extremposition um mehr als 20° unter die Ebene des Chassis (900) nach unten geneigt ist und das Führungselement (130) in der zweiten Extremposition um mehr als 60° über die Ebene des Chassis (900) nach oben geneigt ist.

3. Unterwasserpflug (100) nach einem vorherigen Anspruch, ferner umfassend:
die gesamte Stützfläche des Führungselements ist in allen Ausrichtungen des Führungselements (130) von der Führungsschwenkachse beabstandet.

4. Unterwasserpflug (100) nach einem vorherigen Anspruch, ferner umfassend:
das Führungselement (130) umfasst ein erstes Seitenwandelement (400) und ein weiteres Seitenwandelement (410), das von dem ersten Seitenwandelement (400) beabstandet ist; wobei
das erste Seitenwandelement (400) einen ersten Endbereich nahe der offenen Mündung (135) und ein Schwenklager an einem weiteren Endbereich des ersten Seitenwandelements (400) umfasst, um das Führungselement (130) in einer schwenkbaren Konfiguration zu stützen, und das weitere Seitenwandelement (410) umfasst einen ersten Endbereich nahe der offenen Mündung (135) und ein freies Ende, das sich mit dem ersten Seitenwandelement (400) bewegt, und optional wobei das Führungselement (130) ferner ein Verbindungswandelement (420) umfasst, das sich zwischen dem ersten und dem weiteren Seitenwandelement (400, 410) an einem oberen Randbereich von jedem Wandelement (400, 410) erstreckt und eine Innenfläche bereitstellt, die mindestens teilweise die Führungsfläche bereitstellt.

5. Unterwasserpflug (100) nach Anspruch 4, ferner umfassend:
das Führungselement (130) umfasst ferner mindestens ein Verriegelungselement (450), das selektiv das flexible längliche Element (200) innerhalb des Führungselements (130) hält oder das flexible längliche Element (200) von dem Führungselement (130) freigibt.

6. Unterwasserpflug (100) nach Anspruch 5, ferner umfassend:
das Verriegelungselement (450) umfasst eine Vielzahl von Stiftelementen (450₀₋₅), die entlang eines unteren Randbereichs des ersten und des weiteren Seitenwandelements (400, 410) angeordnet sind, wobei jedes Stiftelement (450₀₋₅) in eine erste Position gebracht werden kann, um einen offenen Boden des Führungselements (130) zu schließen, oder in eine weitere Position, um einen Durchgang des flexiblen länglichen Elements (200) in das und aus dem Führungselement (130) zu ermöglichen.

7. Unterwasserpflug (100) nach einem der Ansprüche 4 bis 6, ferner umfassend:
die Seitenwände (400, 410) des Führungselements (130) sind bogenförmig sind und weiten sich nahe der offenen Mündung (135) des Führungselements (130) auf.

8. Unterwasserpflug (100) nach einem vorherigen Anspruch, ferner umfassend:
einen Deichselkörper (155), umfassend mindestens einen Schwenkarmbereich, der an einem ersten Endbereich des Deichselkörpers (155) um eine Deichselschwenkachse schwenkbar ist.

9. Unterwasserpflug (100) nach Anspruch 8, ferner umfassend:
der Deichselkörper (155) ist in eine verschachtelte Position über dem Führungselement (130) schwenkbar, die für ein flexibles längliches Element (200) einen freien Durchgang nach unten bereitstellt, wenn es von dem Führungselement (130) freigegeben wird, und ist in eine angehobene Position schwenkbar, die einen freien Durchgang zu einem flexiblen länglichen Element (200) in dem Führungselement (130) bereitstellt, wenn sich das Führungselement (130) in der zweiten Extremposition befindet,
und optional, wobei der Deichselkörper (155) um die Deichselschwenkachse in eine Position schwenkbar ist, in der der Deichselkörper (155) über die Ebene des Chassis (900) geneigt ist;
und ferner optional, wobei der Deichselkörper (155) um die Deichselschwenkachse in eine Vielzahl von Ausrichtungen zwischen einer ersten Extremposition, in der der Deichselkörper nach unten unter die Ebene des Chassis (900) geneigt ist, zu einer zweiten Extremposition, in der der Deichselkörper (155) nach oben über die Ebene des Chassis (900) hinaus geneigt ist, schwenkbar ist.

10. Unterwasserpflug (100) nach einem der Ansprüche 8 bis 9, ferner umfassend:
einen ersten Deichselflügelbereich, der sich von einem ersten Randbereich des Deichselkörpers (155) erstreckt; und
einen weiteren Deichselflügelbereich, der sich von einem weiteren Randbereich des Deichselkörpers (155) erstreckt.

11. Unterwasserpflug (100) nach einem der Ansprüche 8 bis 10, ferner umfassend:
der Deichselkörper (155) umfasst ferner eine Vielzahl von Lenkgetriebeelementen, die den Unterwasserpflug (100) positionieren und dadurch lenken, wobei die Getriebeelemente mit dem Deichselkörper (155) beweglich sind, wenn dieser schwenkt.

12. Unterwasserpflug (100) nach einem der vorherigen Ansprüche, wobei die Pflugschar (140) geharkt ist und ein Vorschnittelement (366) umfasst, der Unterwasserpflug (100) ferner umfassend:
mindestens eine Strahldüse, um einen Fluidstrahl aus einem unteren Bereich des Vorschnittelements (366) bereitzustellen.

13. Verfahren zum Bereitstellen eines Unterwasserkanals, umfassend die folgenden Schritte:
Anordnen eines Unterwasserpfluges (100), umfassend ein vorderes Ende (110), das einer Schlepprichtung zugewandt ist, und ein hinteres Ende (120), und eines Pflugscharelements (140), das sich im Wesentlichen senkrecht zu einem Pflugchassis (900) erstreckt und einen Absatz (145) umfasst, der sich in einer Ebene erstreckt, die im Wesentlichen parallel zu und beabstandet von einer Ebene des Chassis ist, die einer horizontalen Ebene entspricht, wenn der Pflug eben auf einer horizontalen Fläche steht, wobei die Ebene des Chassis eine Ebene umfassend eine Führungsschwenkachse umfasst, an einer Zielstelle auf einem Meeresboden (210) zusammen mit einem flexiblen länglichen Element (200);
Schleppen des Chassis (900) und des Pflugscharelements (140) entlang des Meeresbodens (210), wo sich ein Kanal befinden soll;
Schneiden eines Kanals in den Meeresboden (210) mittels des Pflugscharelements (140), während der Unterwasserpflug (100) geschleppt wird; und
während der Unterwasserpflug (100) den Kanal schneidet, Führen einer Krümmung eines länglichen flexiblen Elements (200), das mittels eines Führungselements (130) in dem Kanal verlegt werden soll, wobei das Führungselement (130) an dem vorderen Ende ist und von dem Chassis selektiv um die Führungsschwenkachse schwenkbar ist;
**dadurch gekennzeichnet, dass** das Führungselement (130) in eine Vielzahl von Ausrichtungen zwischen einer ersten Extremposition, in der das Führungselement (130) nach unten unter die Ebene des Chassis, die einer horizontalen Ebene entspricht, wenn der Pflug eben auf einer horizontalen Fläche steht, geneigt ist, und einer zweiten Extremposition, in der das Führungselement (130) nach oben über die Ebene des Chassis, die einer horizontalen Ebene entspricht, wenn der Pflug eben auf einer horizontalen Fläche steht, geneigt ist, schwenkbar ist;
wobei das Führungselement (130) in der ersten Extremposition um mehr als 10° unter die Ebene des Chassis (900) nach unten geneigt ist und das Führungselement (130) in der zweiten Extremposition um mehr als 20° über die Ebene des Chassis nach oben geneigt ist.

14. Verfahren nach Anspruch 13, ferner umfassend:
Ablegen des flexiblen länglichen Elements (200) auf dem Meeresboden (210) durch Öffnen mindestens eines Verriegelungselements (450) an einer Unterseite des Führungselements (130).

## Revendications

1. Charrue sous-marine (100) destinée à fournir un canal sous-marin, comprenant :
une extrémité avant (110) qui fait face à une direction de remorquage et une extrémité arrière (120) ;
un élément de soc de charrue (140) s'étendant sensiblement perpendiculaire à un châssis de charrue (900) et comprenant un talon (145) qui s'étend dans un plan sensiblement parallèle à un plan du châssis et espacé de ce-dernier qui correspond à un plan horizontal lorsque la charrue (100) est placé à niveau sur une surface horizontale, ledit plan du châssis comprenant un plan comprenant un axe de pivot de guidage (340) ; et
un élément de guidage pivotant (130) au niveau de l'extrémité avant comprenant un embout ouvert (135) dans une première zone d'extrémité de l'élément de guidage (130) et une surface de support destinée à guider la flexion d'un élément allongé souple (200) ;
ledit élément de guidage (130) pouvant pivoter à partir du châssis autour de l'axe de pivot de guidage, l'axe de pivot de guidage étant au niveau d'une zone d'extrémité supplémentaire de l'élément de guidage (130),
**caractérisé en ce que** l'élément de guidage (130) peut pivoter dans une pluralité d'orientations entre une première position extrême, dans laquelle ledit élément de guidage (130) est incliné vers le bas au-dessous du plan du châssis qui correspond à un plan horizontal lorsque la charrue est placé à niveau sur une surface horizontale, et une seconde position extrême, dans laquelle l'élément de guidage (130) est incliné vers le haut au-dessus du plan du châssis qui correspond à un plan horizontal lorsque la charrue est placée à niveau sur une surface horizontale ;
dans la première position extrême, ledit élément de guidage (130) étant incliné vers le bas de plus de 10° au-dessous du plan du châssis (900) et dans la seconde position extrême ledit élément de guidage (130) étant incliné vers le haut de plus de 20° au-dessus du plan du châssis (900).

2. Charrue sous-marine (100) selon la revendication 1, dans la première position extrême, ledit élément de guidage (130) étant incliné vers le bas de plus de 20° au-dessous du plan du châssis (900) et dans la seconde position extrême ledit élément de guidage (130) étant incliné vers le haut de plus de 60° au-dessus du plan du châssis (900).

3. Charrue sous-marine (100) selon une quelconque revendication précédente, comprenant en outre :
une totalité de la surface de support de l'élément de guidage est espacée de l'axe de pivot de guidage dans toutes les orientations de l'élément de guidage (130).

4. Charrue sous-marine (100) selon une quelconque revendication précédente, comprenant en outre :
ledit élément de guidage (130) comprenant un premier élément de paroi latérale (400) et un élément de paroi latérale (410) supplémentaire espacé du premier élément de paroi latérale (400) ;
ledit premier élément de paroi latérale (400) comprenant une première zone d'extrémité à proximité de l'embout ouvert (135) et un palier de pivot au niveau d'une zone d'extrémité supplémentaire du premier élément de paroi latérale (400) destiné à supporter l'élément de guidage (130) dans un configuration pivotante et ledit élément de paroi latérale (410) supplémentaire comprenant une première zone d'extrémité à proximité de l'embout ouvert (135) et une extrémité libre qui se déplace avec le premier élément de paroi latérale (400), et éventuellement, ledit élément de guidage (130) comprenant en outre un élément de paroi de raccordement (420) qui s'étend entre le premier élément de paroi latérale et les éléments de paroi latérale (400, 410) supplémentaires au niveau d'une zone de bord supérieur de chaque élément de paroi (400, 410) et fournit une surface interne qui fournit au moins partiellement la surface de guidage.

5. Charrue sous-marine (100) selon la revendication 4, comprenant en outre :
l'élément de guidage (130) comprend en outre au moins un élément de verrouillage (450) qui fixe sélectivement l'élément allongé souple (200) à l'intérieur de l'élément de guidage (130) ou libère l'élément allongé souple (200) de l'élément de guidage (130).

6. Charrue sous-marine (100) selon la revendication 5, comprenant en outre :
ledit élément de verrouillage (450) comprend une pluralité d'éléments de broche (450₀₋₅) agencés le long d'une zone de bord inférieur du premier élément de paroi latérale et des éléments de paroi latérale (400, 410) supplémentaires, chaque élément de broche (450₀₋₅) pouvant être situé dans un première position pour fermer un fond ouvert de l'élément de guidage (130) ou dans une position supplémentaire pour permettre le passage de l'élément allongé souple (200) à l'intérieur et hors de l'élément de guidage (130).

7. Charrue sous-marine (100) selon l'une quelconque des revendications 4 à 6, comprenant en outre :
les parois latérales (400, 410) de l'élément de guidage (130) sont arquées et s'évasent à proximité de l'embout ouvert (135) de l'élément de guidage (130).

8. Charrue sous-marine (100) selon une quelconque revendication précédente, comprenant en outre :
un corps de barre d'attelage (155) comprenant au moins une zone de bras de pivot qui peut pivoter autour d'un axe de pivot de barre d'attelage au niveau d'une première zone d'extrémité du corps de barre d'attelage (155).

9. Charrue sous-marine (100) selon la revendication 8, comprenant en outre :
le corps de barre d'attelage (155) peut pivoter dans une position emboîtée au-dessus de l'élément de guidage (130) fournissant un passage libre vers le bas pour un élément allongé souple (200) tandis qu'il est libéré de l'élément de guidage (130) et peut pivoter dans une position élevée fournissant un passage libre à un élément allongé souple (200) dans l'élément de guidage (130) lorsque l'élément de guidage (130) est situé au niveau de ladite seconde position extrême,
et éventuellement, ledit corps de barre d'attelage (155) pouvant pivoter autour de l'axe de pivot de barre d'attelage dans une position dans laquelle le corps de barre d'attelage (155) est incliné au-dessus du plan du châssis (900) ;
et en outre éventuellement, ledit corps de barre d'attelage (155) pouvant pivoter autour de l'axe de pivot de barre d'attelage dans une pluralité d'orientations entre une première position extrême dans laquelle le corps de barre d'attelage est incliné vers le bas au-dessous du plan du châssis (900) vers une seconde position extrême dans laquelle le corps de barre d'attelage (155) est incliné vers le haut au-delà du plan du châssis (900).

10. Charrue sous-marine (100) selon l'une quelconque des revendications 8 à 9, comprenant en outre :
une première zone d'aile de barre d'attelage s'étendant à partir d'une première zone de bord du corps de barre d'attelage (155) ; et
une zone d'aile de barre d'attelage supplémentaire s'étendant à partir d'une zone de bord supplémentaire du corps de barre d'attelage (155).

11. Charrue sous-marine (100) selon l'une quelconque des revendications 8 à 10, comprenant en outre :
le corps de barre d'attelage (155) comprend en outre une pluralité d'éléments d'engrenage de direction qui situent et dirigent ainsi la charrue sous-marine (100), lesdits éléments d'engrenage étant mobiles avec le corps de barre d'attelage (155) lorsqu'il pivote.

12. Charrue sous-marine (100) selon une quelconque revendication précédente, ledit soc de charrue (140) étant incliné et comprenant un élément de coupe avant (366), la charrue sous-marine (100) comprenant en outre :
au moins une buse à jet destinée à fournir un jet de fluide à partir d'une zone inférieure de l'élément de coupe avant (366).

13. Procédé permettant d'obtenir un canal sous-marin, comprenant les étapes de :
placement d'une charrue sous-marine (100), comprenant une extrémité avant (110) qui fait face à une direction de remorquage, et une extrémité arrière (120), et un élément de soc de charrue (140) qui s'étend sensiblement perpendiculaire à un châssis de charrue (900) et comprend un talon (145) qui s'étend dans un plan sensiblement parallèle à un plan du châssis et espacé de ce-dernier qui correspond à un plan horizontal lorsque la charrue est placée à niveau sur une surface horizontale, ledit plan du châssis comprenant un plan comprenant un axe de pivot de guidage, au niveau d'un emplacement cible sur un fond marin (210) ensemble avec un élément allongé souple (200) ;
remorquage du châssis (900) et de l'élément de soc de charrue (140) le long du fond marin (210) où un canal doit être situé ;
coupe d'un canal dans le fond marin (210) par l'intermédiaire de l'élément de soc de charrue (140) tandis que la charrue sous-marine (100) est remorquée ; et
tandis que la charrue sous-marine (100) coupe le canal, guidage d'une courbure d'un élément souple allongé (200) à poser dans le canal par l'intermédiaire d'un élément de guidage (130), ledit élément de guidage (130) étant au niveau de l'extrémité avant et étant sélectivement pivotant à partir du châssis autour de l'axe de pivot de guidage ;
**caractérisé en ce que** l'élément de guidage (130) peut pivoter dans une pluralité d'orientations entre une première position extrême, dans laquelle l'élément de guidage (130) est incliné vers le bas au-dessous du plan du châssis qui correspond à un plan horizontal lorsque la charrue est placé à niveau sur une surface horizontale, et une seconde position extrême, dans laquelle l'élément de guidage (130) est incliné vers le haut au-dessus du plan du châssis qui correspond à un plan horizontal lorsque la charrue est placée à niveau sur une surface horizontale ;
dans la première position extrême ledit élément de guidage (130) étant incliné vers le bas de plus de 10° au-dessous du plan du châssis (900) et dans la seconde position extrême ledit élément de guidage (130) étant incliné vers le haut de plus de 20° au-dessus du plan du châssis.

14. Procédé selon la revendication 13, comprenant en outre :
le dépôt de l'élément allongé souple (200) sur le fond marin (210) en ouvrant au moins un élément de verrouillage (450) sur une partie inférieure de l'élément de guidage (130).
